# EUROPEAN PATENT APPLICATION

(11) **EP 2 037 399 A1**
(43) Date of publication of application: **18.03.2009**
(21) Application number: 08016182.1
(22) Date of filing: 15.09.2008
(51) Int. Cl.: G06K 19/077

(54) **Environment monitoring and recording tag with remote sensing capability**

(30) Priority: 14.09.2007 CA 2602748
(71) Applicant: Intelligent Devices, Inc., Belleville Saint Michael (BB)
(72) Inventor: Petersen, Michael, Rockliffe Park ON KJ1L8J9 (CA); Wilson, Allan, OttawaON K1M 0G3 (CA)
(74) Representative: Smith, Peter James

(57) **Abstract**

A tag (2) for sensing environment conditions in a package may be located within the package or external thereto, and is encased within a food or pharmaceutical grade material such that the tag (2) is hermetically sealed within the material and will not be affected by the environmental conditions to which it will be subjected. The sensor (12) affiliated with the tag (2) can also be located at an end of a conductor or probe (28) that also is hermetically sealed to the material encasing the tag (2) itself. The sensor (12), remotely located with respect to the tag (2), may be located within the package being monitored, while the tag (2) itself is located external to the package. The probe (28) may be formed of stainless steel with the sensor (12) being mounted within the tip of the probe (28) to facilitate penetration of the probe (28) into the package.

## Description

### TECHNICAL FIELD

The present device relates to a reusable environment monitoring tag that can be attached to the exterior of or placed within a product, package, article or container to sense the internal environment of the package including but not limited to temperature, vibration, pressure, radiation, shock, light, position and atmosphere.

### BACKGROUND OF THE INVENTION

Wilson and Petersen in Canadian Patent Application No. 2,483,193 of April 23, 2003 have described a device for monitoring, recording and downloading the temperature history of a package content in transit. A need has been identified for a further refinement of this device to allow it to:
operate in a food grade or pharmaceutical grade environment and for it to transmit its data without the package environment being disturbed (as by opening);
operate in environments whose temperatures are lower or higher than those at which most electronic battery powered devices fail or become unreliable (approximately minus 40 degrees to plus 90 degrees centigrade);
increase the range of the tag's RF broadcast.

### SUMMARY OF THE INVENTION

The present invention addresses the limitations of the prior art and meets the criteria set forth herein. The invention contemplates in one aspect a reusable environment monitoring tag that can be attached to the exterior of or placed within a product, package, article or container to sense the internal environment of the package including but not limited to temperature, vibration, pressure, radiation, shock, light, position and atmosphere. The invention further contemplates the environment monitoring sensor or sensors being located at the end of a probe and at a distance from the electronic recording device described by Petersen and Wilson. The environmental data sensed by the sensor at the end of the probe are monitored, analyzed, stored and subsequently transmitted to an interested party by radio frequency or other means as described in the prior art.

The proposed invention also permits the use of such tags described in the prior art in food grade and pharmaceutical grade environments by enclosing the tag and its probe in a continuous waterproof barrier of food grade plastic or other material separating the electronics and other components of the tag from the environment.

In use the present invention would allow the tag to sense the package environment remotely via the probe being inserted into the interior of the package and the tag being attached to the exterior of the package. This confers two major advances to the prior art:
1) the tag can sense package temperatures below or above those at which electronics fail or become unreliable, as for package contents cooled by dry carbon dioxide ("dry ice") or other super coolants (less than minus 40 degrees centigrade) or packages subjected to extremely high temperatures, as in the hold of a ship (around 90 degrees centigrade); and
2) the tag with its transmitting antenna can be placed on the outside of a package with only the probe penetrating the interior, reducing losses in the tag's RF signal due to passing through the package material. This increases the effective range of the tag's RF downloading ability and also make possible the use of IR as a data transmission medium.

The present invention will be described in greater detail hereinbelow and with reference to the drawings.

### BRIEF DESCRIPTION OF THE DRAWINGS

FIG. 1 illustrates in section a tag encased in food or pharmaceutical grade plastic including the insertion of protective foam and an electrostatic discharge (ESD) safety layer to reduce static charge.
FIG. 2 shows in section the attachment to the tag of a remote sensing probe and its insulating materials before heat sealing.
FIG. 3 is a cross section drawing showing a tag and attached sensor probe after heat sealing.
FIG.4 depicts the attachment of a remote sensing stainless steel probe to a tag before heat sealing.

### DETAILED DESCRIPTION OF THE PREFERRED EMBODIMENTS

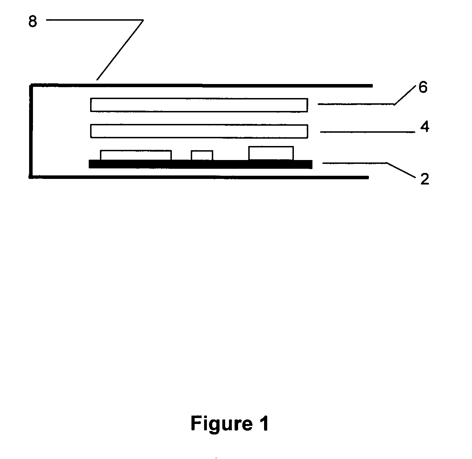

Referring to FIG. 1, an environment monitoring tag 2 comprising electronic components mounted on a substrate is covered by a layer of protective foam 4 over which is located an ESD layer 6 to reduce static buildup. The sandwich comprising tag 2, foam 4 and ESD layer 6 is inserted in a suitably-sized pouch or envelope 8 of food or pharmaceutical grade heat sealable flexible plastic. In one of its embodiments heat and pressure are applied to the perimeter of the sandwich sealing said elements into a waterproof unit.

This unit can then be inserted into a package containing food or medication without concern for contamination and can monitor the environment within the package in the manner described by Petersen and Wilson in the prior art. When polled by an RF field generated by an interested party the environmental data are transmitted through the walls of the container to an appropriate RF reader to be utilized in assessing the history of the environment.

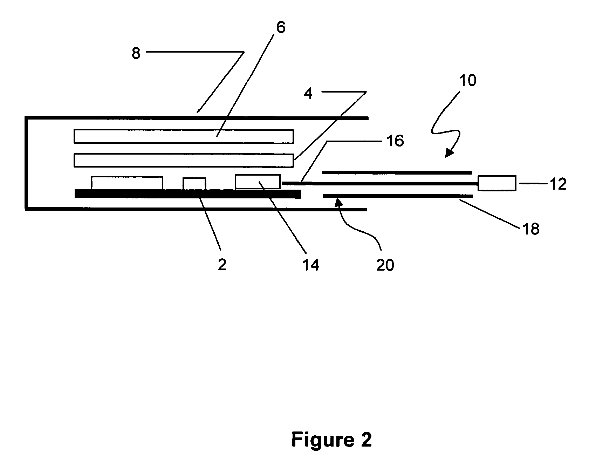

In FIG. 2, an external probe 10 is shown connected to the tag prior to heat sealing. A sensor 12 is connected to the I/P terminals 14 of the tag 2 by a wire or other elongated conductor 16. As in FIG. 1, the tag and its components are encased in an envelope 8 of food or pharmaceutical grade heat sealable flexible plastic. In FIG. 2 the wire or other conductor 16 connecting the sensor 12 to the I/P terminals 14 of the tag 2 is encased in food or pharmaceutical grade heat shrink tubing 18. The tubing 18 is arranged so its proximal end 20 (nearest the tag) is overlapped by the tag's envelope 8 in a manner that when the tag 2 and probe 10 are subjected to heat and pressure the probe's plastic tube 18 will be hermetically sealed into the tag's envelope 8 forming a waterproof unit.

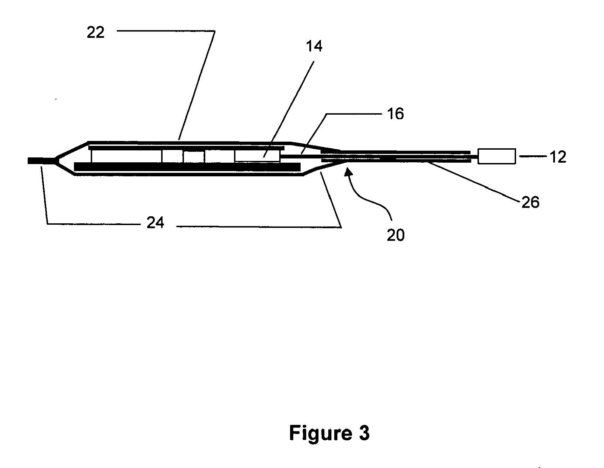

FIG. 3 shows an external probe that has been heat sealed into a tag's envelope to form a waterproof unit. The heat sealed tag sandwich 22 is shown with a heat sealed pouch perimeter 24. The proximal end 20 of the probe's heat sealed shrink tube 26 is also shown hermetically sealed within the heat sealed tag sandwich 22.

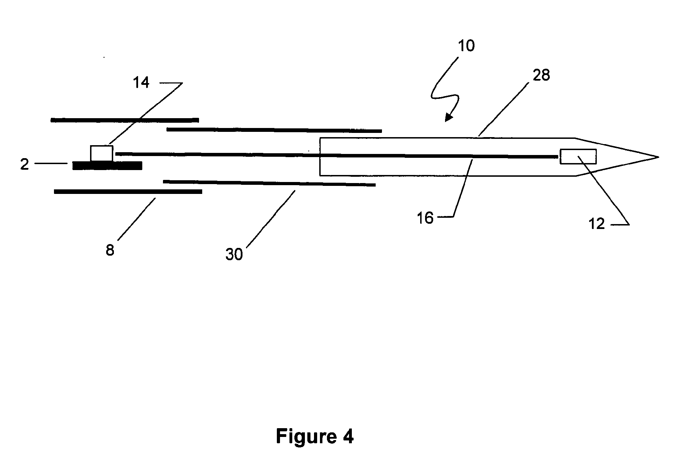

In a further embodiment of the invention shown in FIG. 4 the sensor 12 and the conductor 16 attaching it to the I/P terminals 14 of the tag 2 are encased in a hollow stainless steel stylus 28 to facilitate penetration of the probe 10 through the walls of a container or into its contents. In this embodiment the proximal end of the stylus 28 is encased in heat shrink tubing 30 that extends proximally to be overlapped by the tag's envelope or pouch 8 as described for FIG. 2 above. When the tag 2 and probe 10 are subjected to heat and pressure the stainless steel stylus 28 is hermetically sealed into a waterproof unit with the tag in a similar manner to that described in FIG. 3.

## Claims

1. An environment monitoring device comprising:
a tag (2) comprising an integrated circuit (14) thereon, including antenna means for RF transmission of data acquired by the integrated circuit,
a sensor (12) sensing environmental conditions to which the sensor is subjected, said sensor (12) providing signals based on the environmental conditions to the integrated circuit (14), and
means hermetically sealing said tag (2) within an enclosure (8) composed of food or pharmaceutical grade material.

2. The device of claim 1 wherein said sensor (12) is connected to one end of a conductor (16) permitting the sensor (12) to be placed at a distance from the integrated circuit (14) of the tag (2), said conductor (16) also being hermetically sealed within food or pharmaceutical grade material.

3. The device of claim 1 or claim 2 wherein said food or pharmaceutical grade material is a heat shrink flexible plastic material.

4. The device of claim 1 wherein the sensor (12) is contained in a tip of a rigid stainless steel stylus or probe (28), the proximal end of which is encased in food or pharmaceutical grade heat shrink plastic tubing (30) extending proximally to the integrated circuit (14) of the tag (2) such that when heat and pressure are applied the tubing (30) is sealed into the material hermetically sealing the tag (2) to form a single waterproof unit (24).

5. The device of claim 1 or claim 2 wherein the sensor (12) is contained in a tip of a rigid stainless steel stylus or probe (28) and the sensor (12) is embedded in a container or vessel, the contents of which require monitoring.

6. The device of claim 5 wherein the tag (2) is located on the exterior of the container or vessel.

7. The device of claim 5 wherein the tag (2) is located at a distance from the container or vessel and is connected to the probe.
